# EUROPEAN PATENT APPLICATION

(11) **EP 3 370 237 A1**
(43) Date of publication of application: **05.09.2018**
(21) Application number: 16860074.0
(22) Date of filing: 01.08.2016
(51) Int. Cl.: G21C 19/19, G21D 3/00

(54) **COMPUTER PROGRAM FOR SIMULATING NUCLEAR FUELS AND NUCLEAR FUEL SIMULATION METHOD APPLIED THERETO**

(30) Priority: 28.10.2015 KR 20150150230
(71) Applicant: Korea Hydro & Nuclear Power Co., Ltd, Gyeongju-si, Gyeongsangbuk-do 38120 (KR)
(72) Inventor: JUNG, Sung-In, Uljin-gun Gyeongsangbuk-do 36313 (KR); PARK, Chan-Yan, Uljin-gun Gyeongsangbuk-do 36313 (KR); LEE, Taek-Yoon, Uljin-gun Gyeongsangbuk-do 36313 (KR); KO, Byeong-Kil, Uljin-gun Gyeongsangbuk-do 36313 (KR)
(74) Representative: Stöckeler, Ferdinand
(86) International application number: PCT/KR2016/008452
(87) International publication number: WO 2017/073890

(57) **Abstract**

The present invention relates to a nuclear fuel simulation method comprising: step (a) for receiving an input of data on the order in which nuclear fuels are moved; step (b) for extracting, from the data, information on nuclear fuels, the coordinates of locations from which nuclear fuels are unloaded, and the coordinates of locations into which nuclear fuels are loaded; and step (c) for simulating the information extracted in step (b) according to a flowchart of the data. The present invention has an advantage in that it is possible to accurately and quickly verify all fuel movement works requiring the unloading and loading of nuclear fuels by receiving an input of a huge amount of data on the order in which nuclear fuels are moved and systematically verify an error that may occur during a simulation according to a flowchart, which enables the workload of about three man-days, required per cycle for each reactor, to be done in three man-hours, thereby achieving a significant reduction in working time.

## Description

### [Technical Field]

The present invention relates to a computer program for simulating nuclear fuels and a nuclear fuel simulation method applied thereto, and more particularly, to a computer program and a simulation method for verifying a process of unloading and storing nuclear fuels.

### [Background Art]

Nuclear power plant operations require safe movement of nuclear fuels and accuracy of fuel loading. Therefore, operators must carry out detailed verification to check whether there is no mistake in a created flowchart, such as order, targets, and types of fuels, and the like, in the process of unloading, moving, and loading of nuclear fuels stored in a storage rack or a reactor of a fuel building. Erroneous verification or an error may bring about a critical accident, output imbalance, unexpected reactor shutdown of a reactor at a plant, and, in the worst case scenario, it may lead to a radioactive material leak.

As for fuels of a nuclear power plant, new fuels and a portion of spent fuels are reloaded. Fuels are assigned a unique number and must be loaded to exact locations according to the nuclear design, such as concentration, burn-up, and the like. To this end, a storage location of new fuels and the storage locations of reloaded fuels of spent fuels and discharge fuels are performed based on a planned execution. In detail, for example, in the case of OPR1000 nuclear power plant, 177 fuel assemblies are loaded in a reactor, while in the case of APR1400 nuclear power plant, 241 fuel assemblies are loaded in a reactor. About 1400 fuel storage racks are provided in a fuel building. In order to reload nuclear fuels to a reactor, a movement flowchart of nuclear fuels, such as receiving new fuels and storing the new fuels in a fuel building, unloading fuels from a reactor and storing the same in the fuel building, or loading the new fuels and reused fuels of the fuel building to the reactor, and the like, must be created.

Since about 484 fuel movements occur in the OPR1000 nuclear power plant and about 642 fuel movements occur in the APR1400 nuclear power plant for reloading, it takes much time and effort to create and verify the nuclear fuel movement flowchart. In the related art, creation and verification of the flowchart of nuclear fuels are made manually. In the related art, since a person verifies the movements of nuclear fuels through a manual operation, there is a possibility of a human error and a huge amount of time is required. As a result, a method for safely and efficiently managing movements of nuclear fuels in a light-water reactor of a nuclear power plant is required.

### [Related art document]

### [Patent document]

(Patent document 1) Korean Patent Registration No. 156488

### [Disclosure]

### [Technical Problem]

An object of the present invention is to provide a method and a program for simulating all fuel movement works for unloading and loading nuclear fuels such that the movements of nuclear fuels may be quickly and accurately verified.

### [Technical Solution]

According to an aspect of the present invention, there is provided a nuclear fuel simulation method including: step (a) of receiving an input of data regarding movement order of nuclear fuels; step (b) of extracting, from the data, information on nuclear fuels, the coordinates of a region from which nuclear fuels are unloaded, and the coordinates of a region to which nuclear fuels are loaded; and step (c) of simulating the information extracted in step (b) according to a flowchart of the data.

Preferably, step (c) may include a first verification step of detecting an unloading error of nuclear fuels during the simulation; and a second verification step of detecting a loading error of nuclear fuels during the simulation.

Preferably, step (c) may further include a third verification step of detecting an error that may occur during movement of nuclear cells during the simulation, wherein the third verification step may include detecting whether a reactor refueling crane and a wall surface interfere with each other by examining a master direction of the reactor refueling crane.

Preferably, step (c) may further include: a fourth verification step of detecting a stand-alone state in which nuclear fuels are not loaded in contact with the wall surface or other fuels during the simulation.

According to an aspect of the present invention, there is provided a computer program in which a nuclear fuel simulation is performed may execute, in a computer which includes a database storing data regarding the movement order of nuclear fuels, a processor simulating the data stored in the database, and a display unit displaying the simulation, step (a) of receiving, by the database, data in which the movement order of nuclear fuels are set; step (b) of extracting, by the processor, information of nuclear fuels, the coordinates of a target from which nuclear fuels are to be unloaded and the coordinates of a target to which nuclear fuels are loaded, from the data; step (c) of simulating, by the processor, the information extracted in step (b) according to a flowchart of the data; and step (d) of displaying, by the display unit, a simulation result and an error.

### [Advantageous Effects]

According to embodiments of the present invention, it is possible to accurately and quickly verify all fuel movement works requiring the unloading and loading of nuclear fuels by receiving an input of a huge amount of data on the order in which nuclear fuels are moved and systematically verify an error that may occur during a simulation according to a flowchart, which enables the workload of about three man-days, required per cycle for each reactor, to be done in three man-hours, thereby achieving a significant reduction in working time.

In addition, the application of the present invention eliminates human errors in verifying movements of nuclear fuels, a fuel status board, which is a conventional hardware structure, may be managed by software, and a fuel movement status which has manually been written, is automated, increasing convenience of delivery and reporting.

### [Description of Drawings]

FIG. 1 is a flowchart of a nuclear fuel simulation method according to an embodiment of the present invention.
FIG. 2 illustrates an embodiment of data relating to order of movement of nuclear fuels received in step (a) according to an embodiment of the present invention.
FIGS. 3A to 3C are diagrams illustrating a place where nuclear fuels are located according to an embodiment of the present invention.
FIG. 4 illustrates an exemplary coding of a first stage of verification according to an embodiment of the present invention.
FIG. 5 illustrates an exemplary coding of a second stage of verification according to an embodiment of the present invention.
FIG. 6 illustrates an exemplary coding of a third stage of verification according to an embodiment of the present invention.
FIG. 7 illustrates an example of a stand-along state according to an embodiment of the present invention.
FIG. 8 illustrates an exemplary coding of a fourth stage of verification according to an embodiment of the present invention.
FIG. 9 illustrates an embodiment of the operation module UI according to an embodiment of the present invention.
FIG. 10 illustrates an example of displaying a fuel movement simulation in step (d) according to an embodiment of the present invention.

### [Best Modes]

Hereinafter, the present invention will be described in detail with reference to the accompanying drawings. However, the present invention is not limited to or limited by the exemplary embodiments. Like reference numerals in the drawings denote members performing substantially the same function.

The objects and effects of the present invention may be understood or clarified naturally by the following description and the objects and effects of the present invention are not limited only by the following description. Also, in describing the present invention, if a detailed description of known functions or components associated with the present invention unnecessarily obscures the gist of the present invention, the detailed description will be omitted.

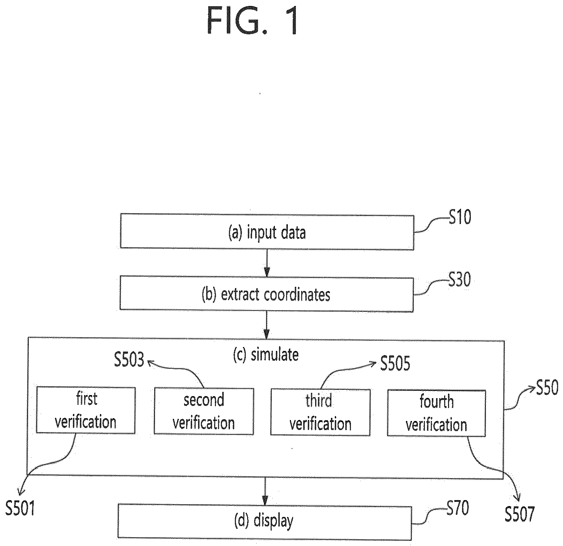

FIG. 1 illustrates a flowchart of a nuclear fuel simulation method according to an embodiment of the present invention. Referring to FIG. 1, the nuclear fuel simulation method includes step (a) of receiving data (S10), step (b) of extracting coordinates (S30), step (c) of simulating movement of nuclear fuels, and step (d) of displaying a simulation result (S70).

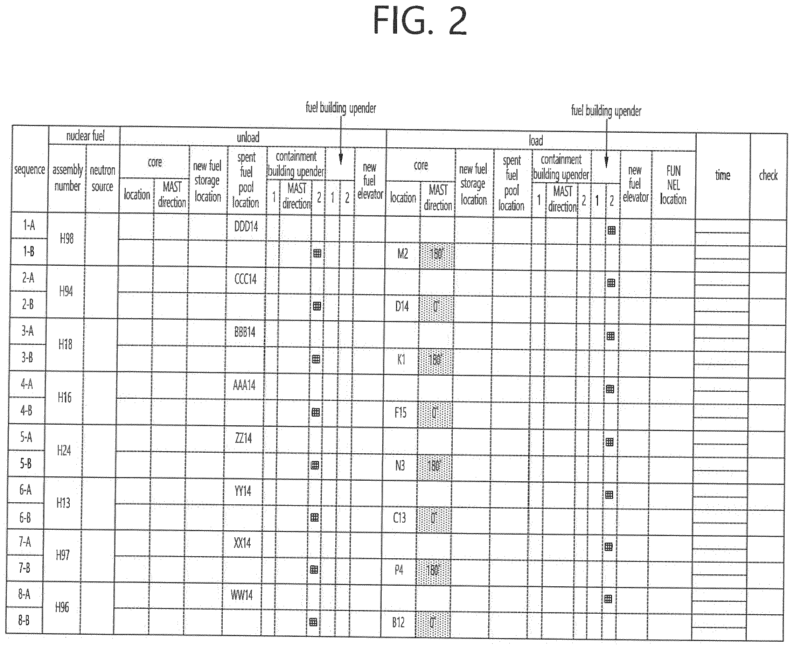

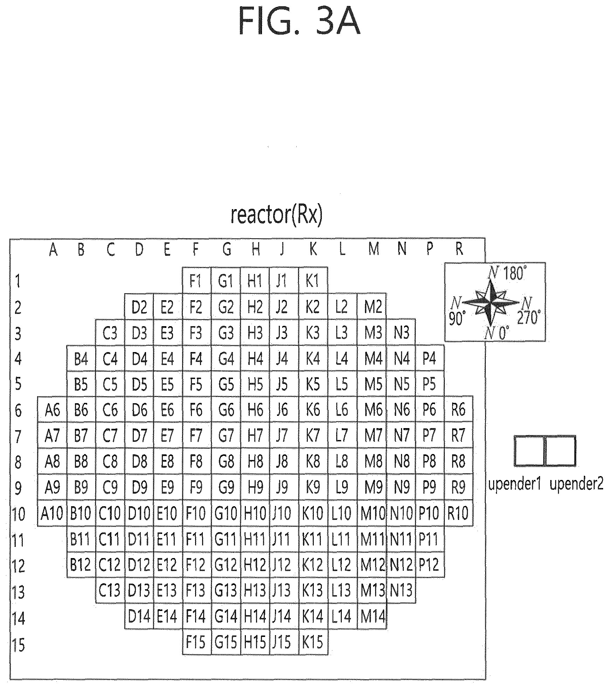

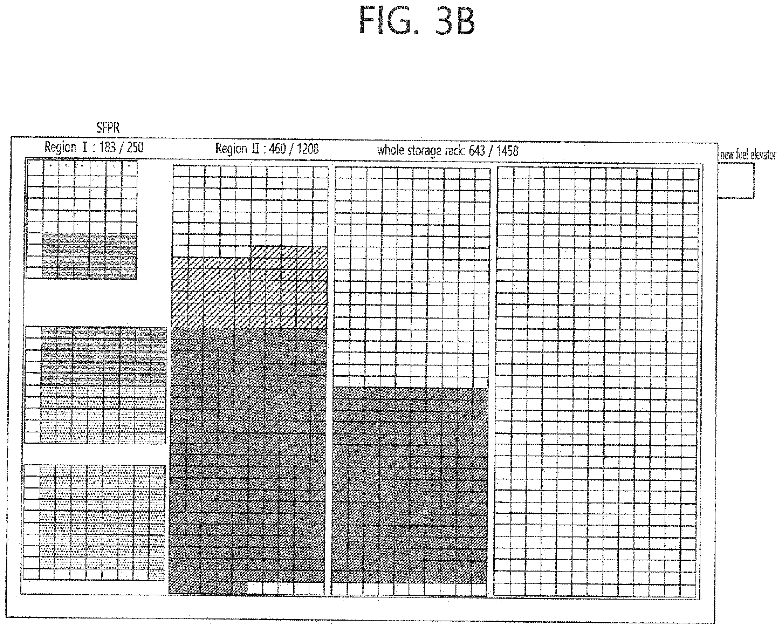

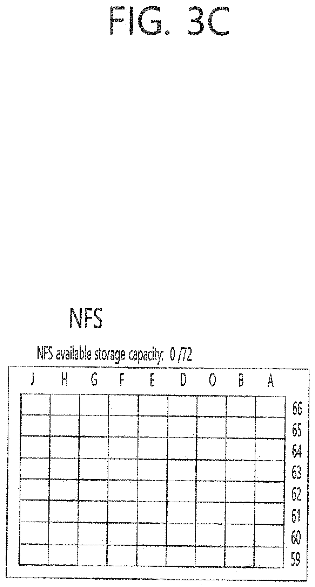

In step (a) (S10), data regarding order of movement of nuclear fuels is received. FIG. 2 illustrates an embodiment of data relating to order of movement of nuclear fuels received in step (a) (S10). Referring to FIG. 2, information on the order of movement of fuels, nuclear fuel number, information on unloading, information on loading, information on time, and the like, are recorded in the data. In order to facilitate understanding of the explanation, places where nuclear fuels are located may be schematized as illustrated in FIGS. 3A to 3C.

Referring to FIGS. 3A to 3C, in the present embodiment, movements of nuclear fuels may include storing new fuels in a new fuel storage (NFS), moving the new fuels stored in the NFS to store the same in a spent fuel pool rack (SFPR), moving spent fuels from a reactor(Rx) to store the same in the SFPR, exchanging inserts, and moving the new fuels and reloaded fuels from the SFPR to load the same to the Rx. The nuclear fuels may be divided into new fuels and spent fuels, and the movement order should be accurately followed according to types of fuel and types of storage rack.

All fuel movements are carried out after a movement flowchart of the nuclear fuels is created and examined. The movement flowchart illustrated in FIG. 2 is created for each kind of nuclear power plant, and the amount thereof is generally enormous. For example, data on the order of movements of nuclear fuels amounts to about 60 pages in the case of OPR1000 nuclear power plant and amounts to about 80 pages in the case of APR1400 nuclear power plant.

The fuel movement flow chart is carefully examined by an operator and a manager before fuel movement. In order to resolve the difficulty that a huge amount of time is taken for verifying each of coordinates of a reactor and spent fuel storage racks in verification of movements of nuclear fuels, in each step of the simulation to be described hereinafter, the data received in step (a) (S10) is analyzed STEP BY STEP and fuel movement is expressed as animation in coordinates of the reactor, a transporter, the spent fuel storage racks, a new fuel elevator, a NFS, and the like, and whether there is a movement error is verified.

In step (b) (S30), information of the nuclear fuels, the coordinates regarding a region from which nuclear fuels are to be unloaded, and the coordinates of a region to which nuclear fuels are to be loaded may be extracted from the data of the movement flowchart received in step (a) (S10). The information of nuclear fuels may be information regarding new fuels or stored fuels. Referring to FIG. 2, the information of nuclear fuels may be designated as unique numbers regarding fuels so as to be classified.

The coordinates regarding the region from which nuclear fuels are to be unloaded, which are information regarding a target from which fuels are to be unloaded and equipment to be used when the fuels are unloaded, may be location information regarding a core, an NFS, a spent fuel pool, a containment building upender, a fuel building upender, and a new fuel elevator. The coordinates regarding the region to which nuclear fuels are to be loaded, which are information regarding loading of fuels and equipment to be used for loading fuels, may include location information regarding a core, an NFS, a spent fuel pool, a containment building upender, a fuel building upender, and a new fuel elevator.

In step (c) (S50), the information extracted in step (b) (S30) may be simulated according to the flowchart of the data. In step (c) (S50), various fuel movement situations such as forwarding arrangement of new fuels, unloading, insert replacement, loading, and the like, may be simulated using the data of the extracted movement flowchart.

A basic unit of fuel movement is classified as unloading and loading, and in step (c) (S50), unloading a loading matters are examined, while order items are sequentially read from the data of the movement flowchart. In this case, in step (c) (S50), four movement verification steps may be performed.

Step (c) (S50) may include first verification step S501, second verification step S503, third verification step S505, and fourth verification step S507.

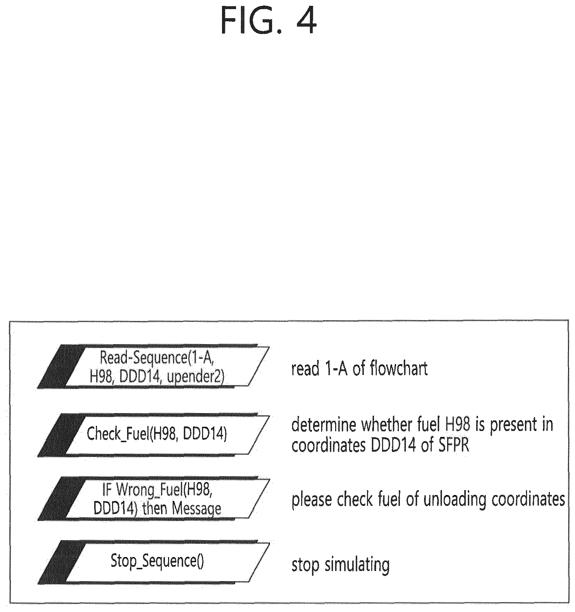

In the first verification step (S501), an unloading error of nuclear fuels during the simulation process may be detected. FIG. 4 illustrates an exemplary coding of the first verification step (S501).

As illustrated in FIG. 4, in the first verification step (S501), the presence and absence of fuel indicated in the flowchart is checked at the time of unloading fuels, and if the corresponding fuel is not present or any other fuel is present, an error message is displayed.

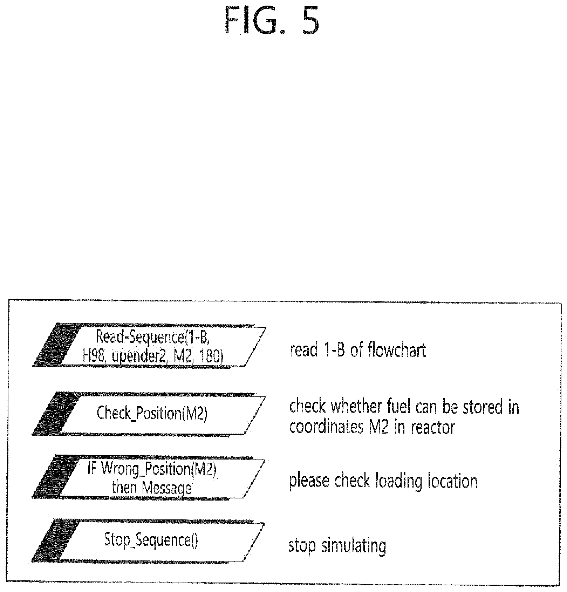

In the second verification step (S503), a loading error of nuclear fuels during the simulation process may be detected. FIG. 5 illustrates an exemplary coding of the second verification step (S503).

As illustrated in FIG. 5, in the second verification step (S503), it is determined whether storing is possible at the coordinates of loading fuels, and if the loading location is not empty, an error message is displayed.

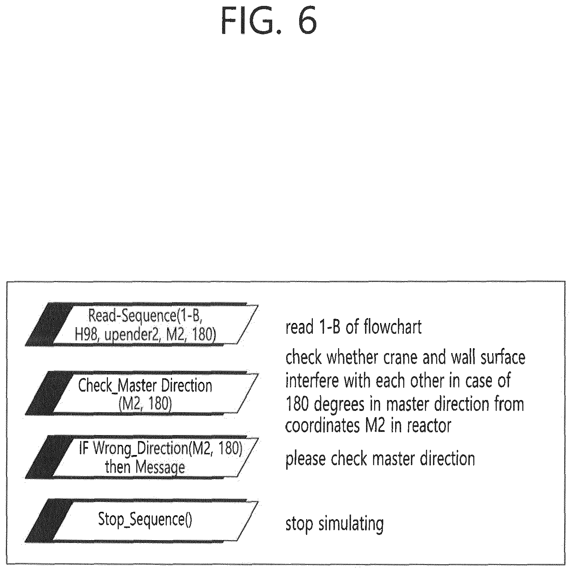

In the third verification step (S505), an error during movement of nuclear fuels in the process of simulation may be detected. An error that may occur during the movement of nuclear fuels may be whether a crane and a wall interfere with each other. FIG. 6 illustrates exemplary coding of the third verification step (S505).

As illustrated in FIG. 6, in the third verification step (S505), it is determined whether interference between a reactor refueling crane and a wall surface is anticipated by examining a master direction of the crane, and a warning message may be displayed.

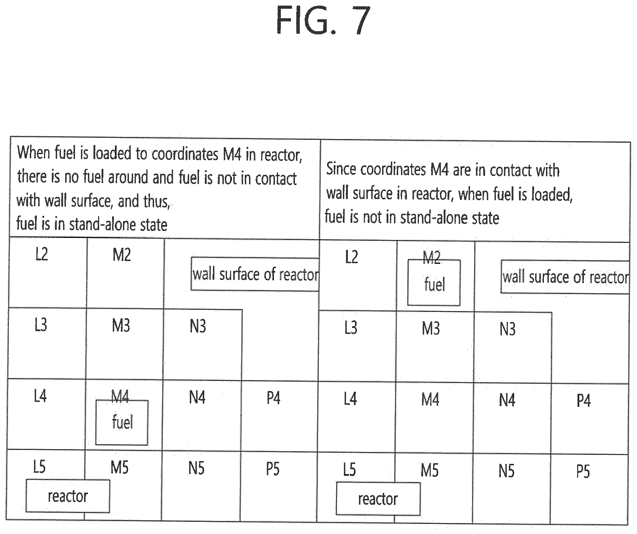

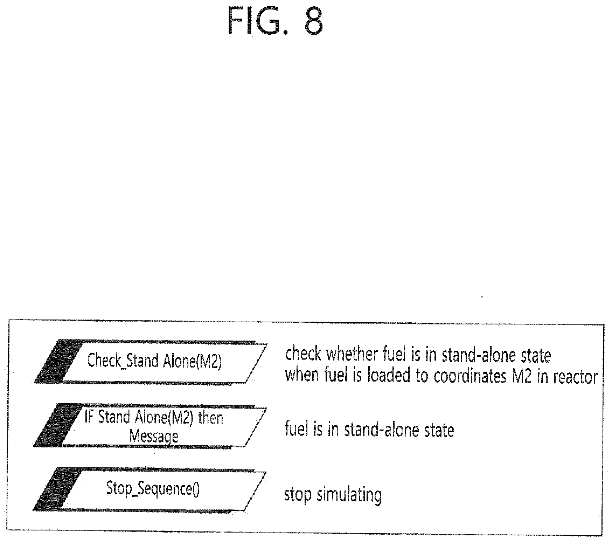

In the fourth verification step (S507), a stand-alone state in which the nuclear fuels are not in contact with the wall surface or other fuels during the simulation process may be detected. FIG. 7 illustrates an example of the stand-alone state, and FIG. 8 illustrates exemplary coding of the fourth verification step (S507).

As illustrated in FIGS. 7 and 8, in the fourth verification step (S507), a state of the reactor in which it is difficult to unload or load fuels may be determined in advance.

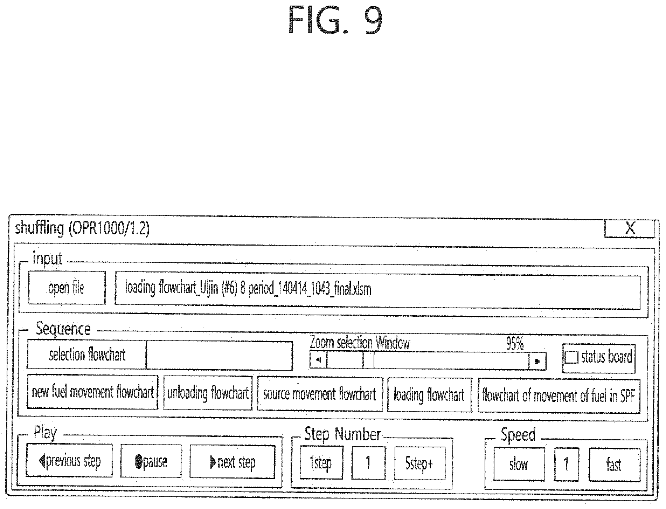

In step (c) (S50), selection of the flowchart, a simulation speed, and the like, may be regulated through an operating module. FIG. 9 illustrates an embodiment of the operating module UI.

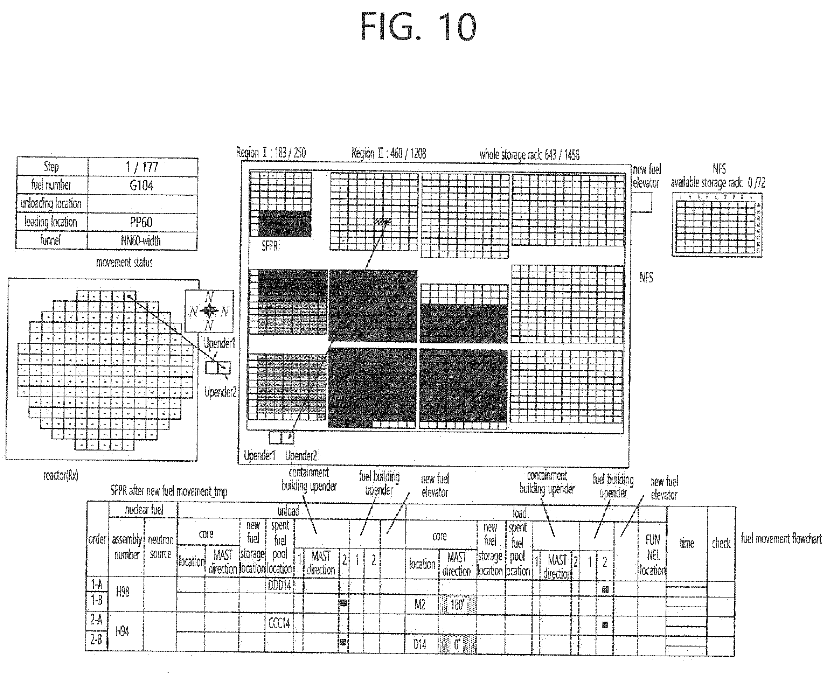

In step (d) (S70), the simulation performed in step (c) (S50) may be displayed in real time. In step (d) (S70), STEP of the current flowchart and items such as the fuel number, an unloading location, a loading position, a panel, and the like may be displayed. The real-time sign of the nuclear fuel movement verification ensures visibility of the information transfer to the operator during the fuel movement operation and, since the sign may be used as a movement status board, eliminating the task of manual preparation. FIG. 10 illustrates an embodiment of displaying a fuel movement simulation in step (d) (S70).

According to another aspect of the present embodiment, the nuclear fuel simulation method described above may be realized by a computer program. The computer program in which the nuclear fuel simulation is performed may execute, in a computer which includes a database storing data regarding the movement order of nuclear fuels, a processor simulating the data stored in the database, and a display unit displaying the simulation, step (a) of receiving, by the database, data in which the movement order of nuclear fuels are set (S10); step (b) of extracting, by the processor, information of nuclear fuels, the coordinates of a target from which nuclear fuels are to be unloaded and the coordinates of a target to which nuclear fuels are loaded, from the data (S30); step (c) of simulating, by the processor, the information extracted in step (b) according to a flowchart of the data (S30); and step (d) of displaying, by the display unit, a simulation result and an error (S70). Each step of the program means that the simulation method described above with reference to FIG. 1 is executed in conjunction with hardware, so detailed description thereof will be omitted.

While the present invention has been particularly shown and described with reference to exemplary embodiments thereof, a person skilled in the art will understand that the invention is not limited to the disclosed exemplary embodiments but may be variously modified within the scope of the present invention. Therefore, the scope of the present invention should not be limited to the above-described embodiments but should be determined by all changes or modifications derived from the scope of the appended claims and equivalents of the following claims.

## Claims

1. A nuclear fuel simulation method comprising:
step (a) of receiving an input of data regarding movement order of nuclear fuels;
step (b) of extracting, from the data, information on nuclear fuels, the coordinates of a region from which nuclear fuels are unloaded, and the coordinates of a region to which nuclear fuels are loaded; and
step (c) of simulating the information extracted in step (b) according to a flowchart of the data.

2. The nuclear fuel simulation method of claim 1, wherein
step (c) includes a first verification step of detecting an unloading error of nuclear fuels during the simulation; and a second verification step of detecting a loading error of nuclear fuels during the simulation.

3. The nuclear fuel simulation method of claim 1, wherein
step (c) further includes a third verification step of detecting an error that may occur during movement of nuclear cells during the simulation,
wherein the third verification step include detecting whether a reactor refueling crane and a wall surface interfere with each other by examining a master direction of the reactor refueling crane.

4. The nuclear fuel simulation method of claim 1, wherein
step (c) further includes: a fourth verification step of detecting a stand-alone state in which nuclear fuels are not loaded in contact with the wall surface or other fuels during the simulation.

5. A computer program stored in a medium executes, in a computer which includes a database storing data regarding the movement order of nuclear fuels, a processor simulating the data stored in the database, and a display unit displaying the simulation,
step (a) of receiving, to the database, the data in which the movement order of nuclear fuels are set;
step (b) of extracting, by the processor, information of nuclear fuels, the coordinates of a target from which nuclear fuels are to be unloaded and the coordinates of a target to which nuclear fuels are loaded, from the data;
step (c) of simulating, by the processor, the information extracted in step (b) according to a flowchart of the data; and
step (d) of displaying, by the display unit, a simulation result and an error.
